# EUROPEAN PATENT APPLICATION

(11) **EP 3 836 617 A1**
(43) Date of publication of application: **16.06.2021**
(21) Application number: 19847663.2
(22) Date of filing: 31.05.2019
(51) Int. Cl.: H04W 28/16, B60L 15/42, B61L 23/00, H04W 4/42, H04W 52/18, H04W 84/00

(54) **MANAGEMENT SERVER AND MANAGEMENT METHOD**

(30) Priority: 07.08.2018 JP 2018148842
(71) Applicant: Panasonic Intellectual Property Management Co., Ltd., Osaka-shi, Osaka 540-6207 (JP)
(72) Inventor: HASHIMOTO, Kazuki, Osaka-shi, Osaka 540-6207 (JP)
(74) Representative: Eisenführ Speiser
(86) International application number: PCT/JP2019/021874
(87) International publication number: WO 2020/031476

(57) **Abstract**

A train position management server (1) detects proximity of, for example, two trains by acquiring position information of each of the two trains; if the proximity of the two trains is detected, determines interference avoidance measures for avoiding radio wave interference generated between the two trains which is selected in accordance with priority from any one of (1) switching of communication frequency band, (2) suppression of transmission power and increase in modulation rate, and (3) network configuration control; and transmits an instruction to implement the determined interference avoidance measures to at least one of the two trains.

## Description

### TECHNICAL FIELD

The present invention relates to a management server and a management method in a system building a network in a train, for example, including a plurality of cars, by connecting the plurality of cars with a WiGig (registered trademark) communication device, the management server and the management method capable of suppressing radio wave interference generated between the train and other trains in proximity to the train.

### BACKGROUND ART

In related art, in the above-described system for building the network in the train, it is required to always ensure stable communication quality. Therefore, an antenna having wide-angle radiation characteristics is used for the WiGig (registered trademark) communication device installed in each car such that the communication quality can be maintained even during curve traveling.

For example, Patent Literature 1 discloses an in-vehicle communication device capable of maintaining communication quality by reducing possibility that communication in an vehicle interferes with communication of other vehicles in terms of radio wave when an oncoming vehicle or an adjacent vehicle approaches. In the in-vehicle communication device, communication conditions of an in-vehicle radio communication unit are changed in a direction of reducing radio wave interference with outside of the vehicle based on information obtained from the outside by an out-vehicle radio communication unit. For example, when a plurality of vehicles using an ultra wide band (UWB) in the vehicle are in proximity, based on information obtained from a data center outside the vehicle, different channels are used if a free channel is present, transmission power is reduced if no free channel is present, and radio wave interference is avoided by adjusting a transmission timing if no free channel is present and effects of reducing the transmission power is not expected.

### CITATION LIST

### PATENT LITERATURE

Patent Literature 1: JP-A-2010-166468

### SUMMARY OF INVENTION

### TECHNICAL PROBLEM

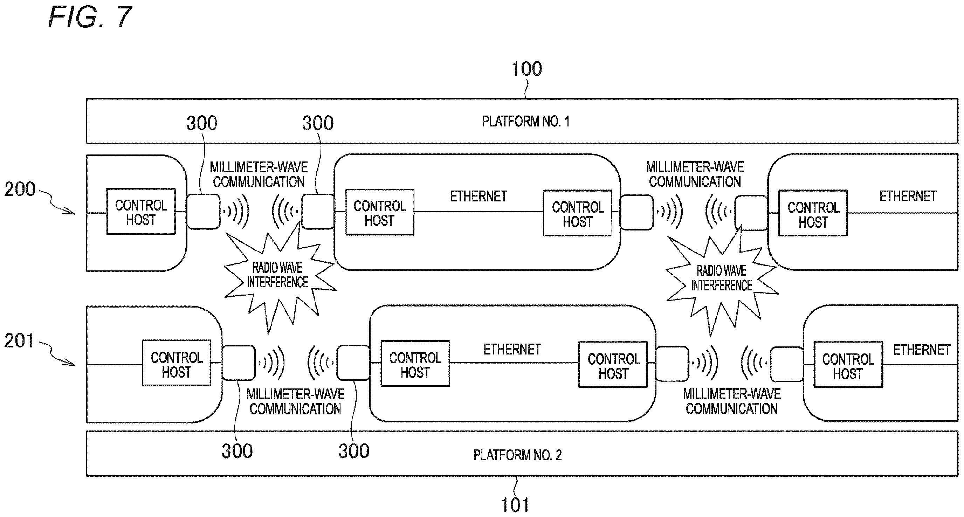

In the system for building the network in the train, a different form of radio wave interference is generated. For example, when a plurality of trains are stopped at a station, a radio wave emitted by a WiGig (registered trademark) communication device installed for inter-car communication of one train may interfere with a radio wave emitted from a WiGig (registered trademark) communication device installed for in-car communication on other trains, resulting in deterioration of the communication quality and disconnection of a line. Fig. 7 is a schematic diagram showing a radio wave interference state of two trains 200, 201 stopped at a station. As shown in the drawing, although communication is being performed by a WiGig (registered trademark) communication device 300 between cars of each of the train 200 stopped at a first platform 100 of a station and the train 201 stopped at a second platform 101, radio wave interference is generated by radio waves emitted from the WiGig (registered trademark) communication device 300 mounted on each car of the train 200 and the WiGig (registered trademark) communication device 300 mounted on each car of the train 201.

An object of the present invention is to provide a management server and a management method capable of suppressing radio wave interference between groups due to radio communication between a plurality of moving objects constituting a group.

### SOLUTION TO PROBLEM

A management server according to the present embodiment configured to manage a group including a plurality of moving objects, each of the plurality of moving objects performing radio communication with other moving objects belonging to the same group and moving with other moving objects in the same group, the management server includes: a position acquisition unit configured to acquire position information of each of a plurality of groups; a proximity detection unit configured to detect groups in proximity to each other based on the position information of each of the plurality of groups; an interference avoidance measures determination unit configured to determine interference avoidance measures in response to detection of the groups in proximity to each other, the interference avoidance measures being for avoiding radio wave interference between the groups in proximity to each other, the radio wave interference being generated by the radio communication performed within each of the groups in proximity to each other; and an interference avoidance measures transmission unit configured to transmit an instruction to implement the determined interference avoidance measures to at least one of the groups in proximity to each other.

According to the above configuration, when the proximity of the plurality of groups is detected, the interference avoidance measures for avoiding the radio wave interference generated by the radio communication within the group is determined, and the instruction to implement the determined interference avoidance measures is transmitted to at least one group, so that the radio wave interference between the groups generated by the radio communication within each group can be suppressed. Accordingly, even when the plurality of groups are in proximity, stable communication can be performed in the moving objects of each group.

As an aspect of the management server according to the present invention, for example, the interference avoidance measures include radio parameter control on the radio communication between the plurality of moving objects performed within the group.

According to the above configuration, by controlling a radio parameter, generation of the radio wave interference between the groups due to the radio communication within each group can be suppressed.

As an aspect of the management server according to the present invention, for example, the interference avoidance measures determination unit further determines the radio parameter control to switch a communication frequency band if the number of the groups in proximity to each other is equal to or smaller than the number of communication frequency bands available for the radio communication performed within the group.

According to the above configuration, if the number of the groups in proximity to each other is equal to or smaller than the number of usable communication frequency bands, the occurrence of radio wave interference between groups generated by radio communication in each group can be suppressed by switching the communication frequency band.

As an aspect of the management server according to the present invention, for example, the interference avoidance measures determination unit determines the radio parameter control to suppress transmission power of the radio communication performed within the group if the number of the groups in proximity to each other exceeds the number of the communication frequency bands available for the radio communication performed within the group.

According to the above configuration, even when the number of the groups in proximity to each other is too large to be handled by switching of the communication frequency band, the generation of the radio wave interference between the groups due to the radio communication within each group can be suppressed by suppressing the transmission power.

As an aspect of the management server according to the present invention, for example, the interference avoidance measures determination unit determines the radio parameter control to increase a modulation rate of the radio communication performed within the group if the number of the groups in proximity to each other exceeds the number of the communication frequency bands available for the radio communication performed within the group.

According to the above configuration, the generation of the radio wave interference between the groups can be suppressed by increasing the modulation rate.

As an aspect of the management server according to the present invention, for example, the plurality of moving objects are sequenced in each of the groups and the plurality of moving objects perform the radio communication in which a communication amount decreases along the sequence, and the interference avoidance measures determination unit determines the radio parameter control to perform network configuration control that is control to make a direction in which the communication amount decreases different between the groups in proximity to each other.

According to the above configuration, by making the direction in which the communication amount decreases between the groups in proximity to each other, a total band occupancy of the radio communication between the moving objects of each of the groups in proximity to each other is reduced. As a result, the generation of radio wave interference between a plurality of groups can be suppressed.

As an aspect of the management server according to the present invention, for example, the interference avoidance measures determination unit determines that implementation of the interference avoidance measures is not required if a speed at which the groups in proximity to each other are in proximity approach each other is equal to or higher than a predetermined speed.

According to the above configuration, when the approaching speed is high, it is determined that the implementation of the interference avoidance measures is not required. As a result, a load generated by performing unnecessary instructions can be reduced even when a proximity state is expected to end in a short time.

As an aspect of the management server according to the present invention, for example, the interference avoidance measures determination unit determines different interference avoidance measures depending on whether an angle between two or more moving objects included in at least one of the groups in proximity to each other exceeds a predetermined angle.

According to the above configuration, the different interference avoidance measures can be implemented according to a magnitude of the angle between the moving objects. Accordingly, possibility that unsuitable interference avoidance measures will be implemented when the angle between the moving object is large can be reduced.

As an aspect of the management server according to the present invention, for example, the group moves in a predetermined section; if the section where the group moves includes a section where it is difficult to establish communication between the interference avoidance measures transmission unit and at least one of the plurality of moving objects included in the group, the management server predicts whether the groups in proximity to each other is present in the section where it is difficult to establish the communication; and if it is predicted that the groups in proximity to each other are present in the section where it is difficult to establish the communication, the interference avoidance measures determination unit determines the interference avoidance measures before the groups in proximity to each other move to the section where it is difficult to establish the communication, and the interference avoidance measures transmission unit transmits an instruction to implement the determined interference avoidance measures to at least one of the groups in proximity to each other.

According to the above configuration, even in an environment where the interference avoidance measures transmission unit cannot transmit an instruction in real time, the implementation of the interference avoidance measures can be instructed in advance.

As an aspect of the management server according to the present invention, for example, the group is a train formed by connecting the plurality of moving objects, and the plurality of moving objects are a plurality of cars forming the train.

According to the above configuration, one train in which a plurality of cars are connected is used, and the radio wave interference between two trains can be suppressed, for example. Therefore, for example, even when the two trains are in proximity, stable communication can be performed between the cars of each train.

As an aspect of the management server according to the present invention, for example, the radio communication performed by the plurality of moving objects is communication using a millimeter wave.

According to the above configuration, by performing the radio communication using the millimeter wave, a large amount of data can be transmitted at high speed between the moving objects.

A management method according to the present invention for managing a group including a plurality of moving objects, each of the plurality of moving objects performing radio communication with other moving objects belonging to the same group and moving with other moving objects in the same group, the management method includes: acquiring position information of each of a plurality of groups; detecting groups in proximity to each other based on the position information of each of the plurality of groups; determining interference avoidance measures in response to detection of the groups in proximity to each other, the interference avoidance measures being for avoiding radio wave interference between the groups in proximity to each other, the radio wave interference being generated by the radio communication performed within each of the groups in proximity to each other; and transmitting an instruction to implement the determined interference avoidance measures to at least one of the groups in proximity to each other.

According to the above method, when the proximity of the plurality of groups is detected, the interference avoidance measures for avoiding the radio wave interference generated by the radio communication within the group is determined, and the instruction to implement the determined interference avoidance measures is transmitted to at least one group, so that the radio wave interference between the groups generated by the radio communication within each group can be suppressed. Accordingly, even when the plurality of groups are in proximity, stable communication can be performed in the moving objects of each group.

### ADVANTAGEOUS EFFECTS OF INVENTION

The management server and the management method according to the present invention can suppress the radio wave interference between the groups due to the radio communication between the plurality of moving objects constituting the group.

### BRIEF DESCRIPTION OF DRAWINGS

Fig. 1 is a block diagram showing a schematic configuration of a train position management server according to an embodiment of the present invention.
Fig. 2 is a block diagram showing a schematic configuration of an in-train system that communicates with the train position management server shown in Fig. 1.
Fig. 3 is a diagram showing a state in which the train position management server shown in Fig. 1 transmits a radio parameter switching command to a plurality of trains in proximity.
Fig. 4 is a diagram for explaining interference avoidance by network configuration control in two trains each of which is a five-car train.
Fig. 5 is a flowchart for explaining radio parameter determination processing in an LTE (registered trademark) communication-possible route of the train position management server shown in Fig. 1.
Fig. 6 is a flowchart for explaining the radio parameter determination processing in an LTE (registered trademark) communication-impossible route of the train position management server shown in Fig. 1.
Fig. 7 is a schematic diagram showing a radio wave interference state of two trains stopped at a station.

### DESCRIPTION OF EMBODIMENTS

Hereinafter, a preferred embodiment for carrying out the present invention will be described in detail with reference to the drawings.

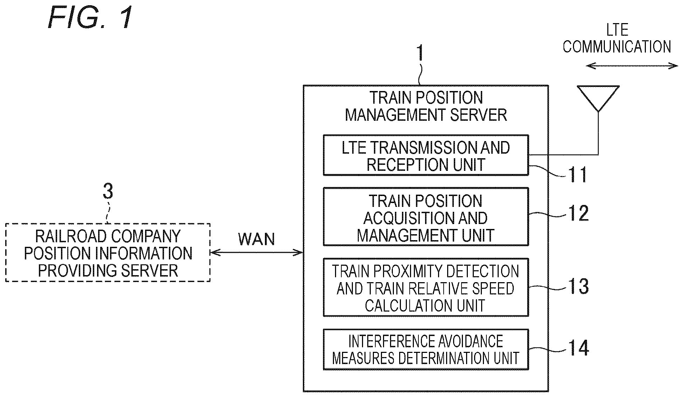

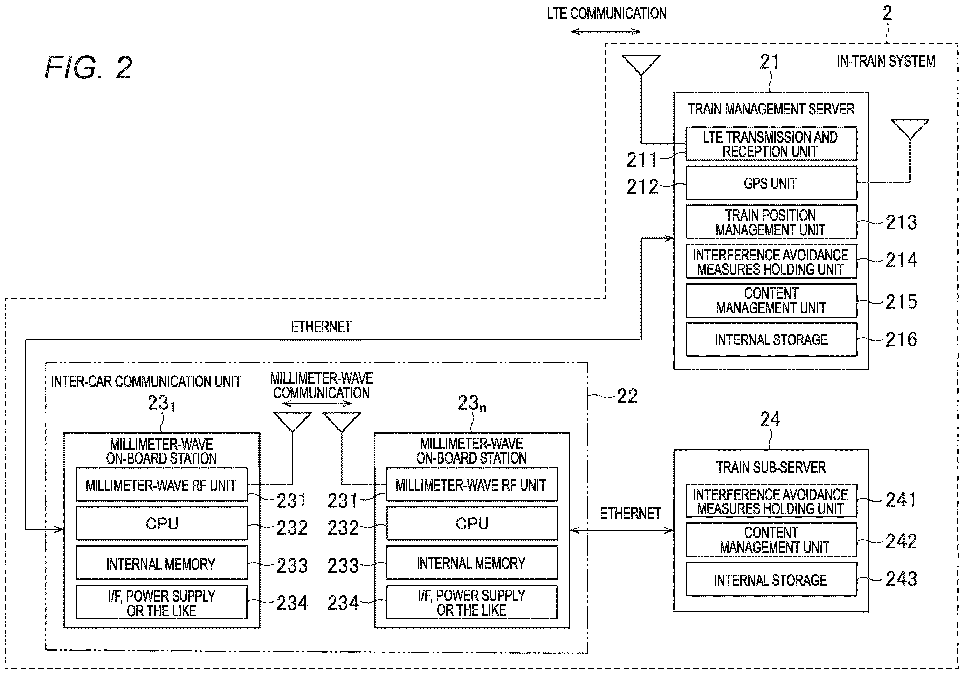

Fig. 1 is a block diagram showing a schematic configuration of a train position management server (a management server) 1 according to an embodiment of the present invention. Fig. 2 is a block diagram showing a schematic configuration of an in-train system 2 that communicates with the train position management server 1. The train described below is a train in which a plurality of cars are connected.

In Fig. 1, the train position management server 1 according to the present embodiment is connected to a position information providing server 3 provided by a railroad company via a wide area network (WAN), and can use a train position information service by accessing the position information providing server 3. More specifically, in recent years, railroad companies have provided a service capable of acquiring train position information via an application programming interface (API) as the train position information service, and this can be used. Hereinafter, the API of the train position information service is referred to as a "train position information service (API)". The train position management server 1 performs long term evolution (LTE, registered trademark) communication with a train management server 21 of the in-train system 2, and transmits train position information, interference avoidance measures and contents, and the like obtained by using the train position information service. In addition to using LTE (registered trademark) for communication between the train position management server 1 and the train management server 21, 3rd generation (3G), WiFi (registered trademark) or WiGig (registered trademark) can also be used.

In order to acquire the train position information, in addition to a method of using the train position information service described above, a method of predicting based on a database of an operation schedule (not shown) and a method in which each train is equipped with a global positioning system (GPS) to periodically notify the train position management server 1 of a traveling position are also conceivable, or these may be combined. Position information of any of the cars constituting the train can be used as the train position information. In this case, the position information of any car such as a leading car, a car near a center, and a trailing car can be used. However, in the present embodiment, since the train position information is used for determining proximity of trains, a reference for the position information of which car is regarded as the train position information is preferably unified among the trains. As will be described below, the train position information service and the GPS mounted on each train are used in the present embodiment. The GPS is a GPS unit 212 mounted on the train management server 21 of the in-train system 2.

In Fig. 1, the train position management server 1 includes: an LTE (registered trademark) transmission and reception unit (an interference avoidance measures transmission unit) 11 that performs LTE (registered trademark) communication with the train management server 21 of the in-train system 2; a train position acquisition and management unit (a position acquisition unit) 12 that acquires and manages the train position information using the train position information service provided by the railroad company; a train proximity detection and train relative speed calculation unit (a proximity detection unit) 13 that detects proximity of a plurality of trains based on the train position information managed by the train position acquisition and management unit 12 and calculates a relative speed between the plurality of trains whose proximity have been detected; and an interference avoidance measures determination unit 14 that determines interference avoidance measures for avoiding radio wave interference generated between the plurality of trains (details will be described later) according to the relative speed between the plurality of trains calculated by the train proximity detection and train relative speed calculation unit 13.

The LTE (registered trademark) transmission and reception unit 11 transmits an instruction to implement the interference avoidance measures determined by the interference avoidance measures determination unit 14 to at least one of the plurality of trains. The interference avoidance measures include control of radio parameters, and are transmitted to at least one of the plurality of trains when the plurality of trains are in proximity. The control of the radio parameters includes: (1) switching of communication frequency band (that is, channel switching), and (2) suppression of transmission power and increase in modulation rate. In addition, in the train in which the plurality of cars as moving objects are connected, (3) network configuration control over the plurality of cars can also be used as the interference avoidance measures. As for a priority of using the interference avoidance measures, the switching of the communication frequency band is the highest, followed by the suppression of the transmission power, the increase in the modulation rate, and the network configuration control. The reason for this is as follows.

If the communication frequency band can be switched, interference can be completely avoided by selectively using the communication frequency band among the trains, so that the priority of the switching of the communication frequency bands is the highest in the present embodiment. The suppression of the transmission power and the increase in the modulation rate can be expected to have certain effects of interference suppression regardless of a relative movement direction of the trains. On the other hand, the network configuration control is less effective when the trains pass each other, and thus has a lower priority than the suppression of the transmission power. However, this priority is merely an example, and control may be performed according to other priorities.

The suppression of the transmission power and the increase in the modulation rate are different in reasons for the interference suppression, and only one of them may be implemented. When the transmission power is suppressed, a range in which a transmission signal arrives is narrowed, and as a result, it can be made difficult for a radio wave to reach other trains. Accordingly, interference with other trains can be suppressed. When the modulation rate is increased, time required for transmitting the same amount of data is reduced, and as a result, time during which a communication band is occupied can be shortened. Accordingly, time to use a radio band between the trains is less likely to overlap, and the interference can be suppressed. When the modulation rate is increased, the interference may be suppressed more precisely by instructing each train for the time to use the radio band.

In Fig. 2, the train management server 21 includes: an LTE (registered trademark) transmission and reception unit 211 that performs the LTE (registered trademark) communication with the LTE (registered trademark) transmission and reception unit 11 of the train position management server 1; the GPS unit 212 that receives a radio signal for positioning transmitted from a GPS satellite and obtains train position information; a train position management unit 213 that manages the train position information obtained by GPS unit 212 and manages the train position information transmitted by the LTE communication from the train position management server 1; an interference avoidance measures holding unit 214 that holds the interference avoidance measures transmitted from the train position management server 1; a content management unit 215 that manages a content transmitted from the train position management server 1; and an internal storage 216 such as a hard disk drive (HD) or a solid state drive (SSD) that stores various types of information such as the content.

A millimeter-wave on-board station 23 that performs millimeter-wave communication between the cars of the train is a WiGig (registered trademark) communication device. The millimeter-wave on-board station 23 is disposed at a rear portion of the leading car of the train, at a front portion of the last car, and at each of a front portion and a rear portion of all the cars excluding the leading car and the last car. Fig. 2 shows the millimeter-wave on-board station 23₁ connected to the train management server 21 disposed in the leading car and the millimeter-wave on-board station 23ₙ disposed in the last car, and illustration of the intermediate millimeter-wave on-board stations 23₂ to 23ₙ₋₁ is omitted. The millimeter-wave on-board stations 23₁ to 23ₙ communicate between cars adjacent to each other, and are thus also referred to as inter-car communication units 22. Since all the millimeter-wave on-board stations 23₁ to 23ₙ have the same configuration, the millimeter-wave on-board station 23₁ will be described below as an example.

The millimeter-wave on-board station 23₁ includes: a millimeter-wave RF unit 231 that modulates a baseband signal into a 60 GHz band and transmits the modulated baseband signal, and receives a millimeter wave in the 60 GHz band, demodulates the millimeter wave into a baseband signal and outputs the baseband signal; a central processing unit (CPU) 232 that controls each part of the millimeter-wave on-board station 23₁; an internal memory 233 that stores a program for controlling the CPU232 and also stores various types of information such as the train position information, the interference avoidance measures and the content used for an operation of the CPU232; and an I/F, a power supply or the like 234 that includes an Ethernet (registered trademark) interface, power supply or the like and supplies power to Ethernet (registered trademark) connection and each part of the device.

A train sub-server 24 mounted on the last car of the train includes: an interference avoidance measures holding unit 241 that holds the interference avoidance measures; a content management unit 242 that manages the content; and an internal storage 243 such as an HD or an SSD that stores various types of information such as the content.

Next, radio parameter control and the network configuration control for avoiding the radio wave interference generated between the plurality of trains will be described in detail. The train position management server 1 detects the proximity of the plurality of trains based on the train position information acquired by using the train position information service (API), determines whether the communication frequency band between the trains can be changed based on the detected proximity information of the plurality of trains, and transmits a communication frequency band switching command when it is determined that the communication frequency band can be changed. As a specific example of a situation in which the communication frequency band can be changed is when the number of trains in proximity is less than or equal to the number of channels supported by a WiGig (registered trademark) communication device (the millimeter-wave on-board station 23). On the other hand, when the number of the trains in proximity exceeds the number of channels supported by the WiGig (registered trademark) communication device (the millimeter-wave on-board station 23), the same channel will always be used between any trains no matter how the channels are assigned. Therefore, when the number of the trains in proximity exceeds the number of channels supported by the WiGig (registered trademark) communication device (the millimeter-wave on-board station 23), the communication frequency band switching command is not transmitted. The number of channels supported by the current WiGig (registered trademark) communication device is often limited up to two channels in terms of implementation. Therefore, even in the present embodiment, it is assumed that the number of channels supported by the WiGig (registered trademark) communication device (the millimeter-wave on-board station 23) is up to two channels, and switching can be performed between up to two trains. Since the number of channels supported by the WiGig (registered trademark) communication device is limited up to four channels under the current Japanese regulation, switching can be performed between up to four trains by using a communication device capable of supporting four channels. It is needless to say that when the WiGig (registered trademark) communication device capable of supporting a larger number of channels is usable due to differences in regulations of countries, technological evolution or law revision, and the like, a corresponding range (the number of trains) will expand accordingly.

When the switching of the communication frequency band cannot handle due to the number of channels supported by the WiGig (registered trademark) communication device (the millimeter-wave on-board station 23), a transmission power suppression command and an modulation and coding scheme (MCS, modulation rate) increase command are transmitted. That is, the train position management server 1 transmits the transmission power suppression command and the MCS (modulation rate) increase command to at least one of the trains in proximity. The train position management server 1 holds in advance a radio wave reception level at normal times without the radio wave interference for a control amount of the transmission power and a control amount of the MCS, and determines an appropriate value in which line quality is not deteriorated due to adjustment. As described above, any one of the transmission power suppression command and the MCS increase command may be transmitted.

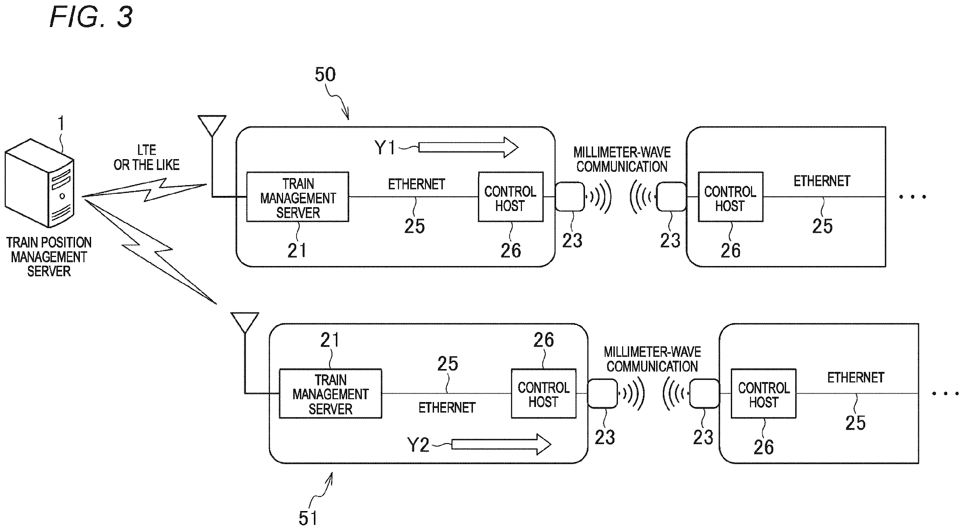

Fig. 3 is a diagram showing a state in which the train position management server 1 transmits a radio parameter switching command to trains 50, 51 in proximity. When the trains 50, 51 are in proximity and it is determined that the communication frequency band can be changed, the train position management server 1 transmits a communication frequency band switching command to at least one of the trains 50, 51. On the other hand, when it is determined that the communication frequency band cannot be changed, the transmission power suppression command and the MCS (modulation rate) increase command are transmitted to at least one of the trains 50, 51.

The train management server 21, an Ethernet (registered trademark) 25, a control host (a client server) 26 and the millimeter-wave on-board station 23 (the WiGig (registered trademark) communication device) are mounted on a leading car of each of the trains 50, 51. The control host 26 is connected to the train management server 21 via the Ethernet (registered trademark) 25. The control host (the client server) 26 shown in Fig. 3 is omitted in Fig. 2 described above. The millimeter-wave on-board station 23 is connected to the control host 26. One millimeter-wave on-board station 23 is disposed at a rear portion of the leading car, and one millimeter-wave on-board station 23 is disposed at a front portion of a last car. In addition, one millimeter-wave on-board station 23 is disposed in each of both a front portion and a rear portion of all the cars excluding the leading car and the last car.

When the radio parameter switching command is transmitted from the train position management server 1 to each of the trains 50, 51, the train management server 21 of each of the trains 50, 51 issues the radio parameter switching command to the control host 26 present in each car. The control host 26 of each car of each of the trains 50, 51 changes a radio parameter of the millimeter-wave on-board station 23 according to the radio parameter switching command issued from the train management server 21. That is, the control host 26 present in each car of each of the trains 50, 51 changes the communication frequency band of the millimeter-wave on-board station 23 (that is, the channel switching), or suppresses the transmission power and increases the MCS. As the communication frequency band is changed or the transmission power is suppressed and the MCS is increased, radio wave interference between each car of the train 50 and each car of the train 51 is reduced. The train management server 21 of each of the trains 50, 51 may independently control the MCS (the modulation rate) when it is found that communication is impossible between the cars. In Fig. 3, an arrow Y1 indicates a data transfer direction in the train 50, and an arrow Y2 indicates a data transfer direction in the train 51.

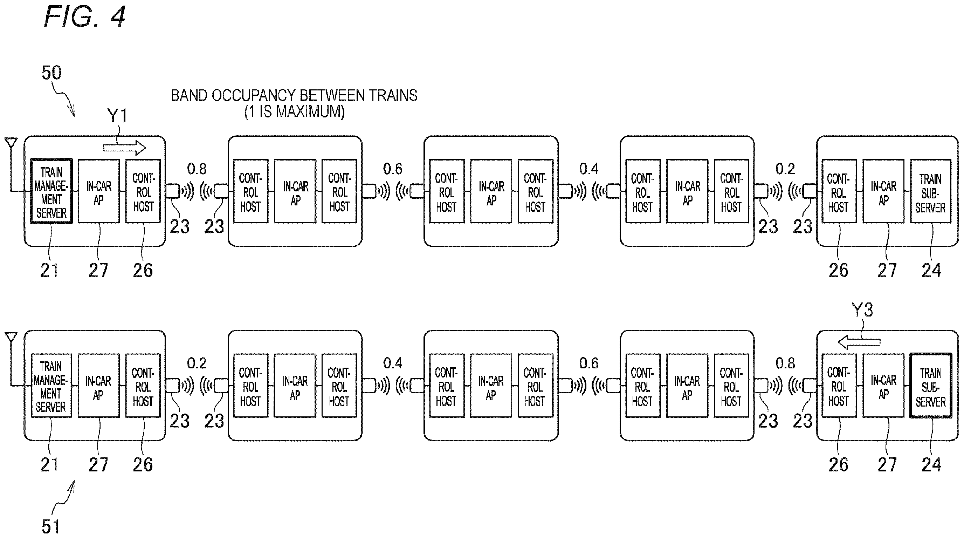

On the other hand, when interference avoidance is difficult by the interference avoidance measures (that is, the change of the communication frequency band, the suppression of the transmission power, and the increase in the MCS), the interference avoidance is performed by the network configuration control described above. For example, in each of the trains 50, 51, an in-car content distribution task or the like is delegated to the train sub-server 24 (see Fig. 4) present in other cars other than the leading car. As a result, the radio wave interference can be suppressed since occupation time of a radio band between the trains 50, 51 is changed.

Fig. 4 is a diagram for explaining the interference avoidance by the network configuration control in the trains 50, 51 each of which is a five-car train. As shown in the drawing, the train sub-server 24 is mounted on the last car of each of the trains 50, 51. In addition to the train management server 21 and the control host 26 described above, an in-car access point (AP) 27 is mounted on the leading car of each of the trains 50, 51. Information synchronization between the train management server 21 mounted on the leading car of each of the trains 50, 51 and the train sub-server 24 mounted on the last car is performed during a time predicted as during which there is no influence of interference. Here, as for the time during which there is no influence of interference, for example, a time during which the trains are unlikely to pass each other can be predicted based on the train position information service, a time table or the like.

For example, by delegating the in-car content distribution task to the train sub-server 24 mounted on the last car, the occupation time of the radio band between the cars of each of the trains 50, 51 is changed. The occupation time of the radio band between the cars of each of the trains 50, 51 is proportional to an amount of communication between the control hosts 26 in the cars. Here, as an in-car content, substantially the same content is generally distributed to the cars, and it is not necessary to transfer the in-car content for a certain car to other cars. Therefore, as the car is apart from the train management server 21, the occupation time of the radio band becomes shorter. For example, in Fig. 4, since data is transferred from the train management server 21 to the control host 26 by 0.2 for each car, a band occupancy between the cars (1 is the maximum) decreases by 0.2 each time being apart from the train management server 21. This band occupancy means a ratio of time during which communication in a certain band is occupied in a certain time unit. That is, when the band occupancy is 1, it means that the communication is occupied for the entire period of the certain time unit. Here, if a total radio band usage amount between the trains 50, 51 that can interfere with each other is 100% or less, a timing of the communication can be adjusted such that the time during which the radio band is occupied does not overlap between the trains 50, 51, so that interference can be avoided. In Fig. 4, an arrow Y1 in the leading car of the train 50 indicates a data transfer direction from the train management server 21, and an arrow Y3 in the last car of the train 51 indicates a data transfer direction from the train sub-server 24. The data transfer direction from the train management server 21 of the train 50 and the data transfer direction from the train sub-server 24 of the train 51 are opposite.

Next, differences between an LTE (registered trademark) communication-possible route and an LTE (registered trademark) communication-impossible route in a control content of which the train is notified by the train position management server 1 will be described. Basically, it is desirable that the train position management server 1 and the train can always communicate by the LTE (registered trademark) communication or the like, but when it is difficult to establish the LTE (registered trademark) communication in a mountainous area or the like, the control content to be used until a next station stop may be determined, for example, in a station stop time during which communication is possible. In the LTE (registered trademark) communication-possible route, the train position management server 1 sequentially issues commands to the train management server 21 by the LTE (registered trademark) communication since communication is possible even during train traveling. On the other hand, in the LTE (registered trademark) communication-impossible route, the train position management server 1 notifies the train management server 21 of the control content to be used until the next station by the LTE (registered trademark) communication during station stop time, or notifies the train management server 21 by platform-to-train WiGig (registered trademark) communication.

Next, as a control method, in the LTE (registered trademark) communication-possible route, the radio parameter control or the network configuration control is performed by sequential commands. On the other hand, in the LTE (registered trademark) communication-impossible route, a communication frequency and a network configuration to be used until the next station are set during the station stop time. Here, the number of trains in proximity and the time during which the trains are in proximity until the next station can be predicted based on the train position information service, the time table or the like. Therefore, during the station stop, the communication frequency band and the network configuration can be set by reflecting the prediction result. Not only until the next station, it is also possible to predict the number of the trains in proximity and the time for the entire period from the first station to the last station of the train, and to set the communication frequency band and the network configuration. However, since a traveling schedule of the train changes from time to time due to a sudden accident or the like, more accurate control can be performed by setting a section to the next station each time the train arrives at a station. Each train may perform MCS control serving as the radio parameter control as a self-defense means when interference is detected even without any instruction.

Next, radio parameter determination processing in the train position management server 1 according to the present embodiment will be described separately for a case of the route where the LTE (registered trademark) communication is possible and a case of the route where the LTE (registered trademark) communication is impossible. In the following description, the trains 50, 51 described above will be taken as an example of the plurality of trains.

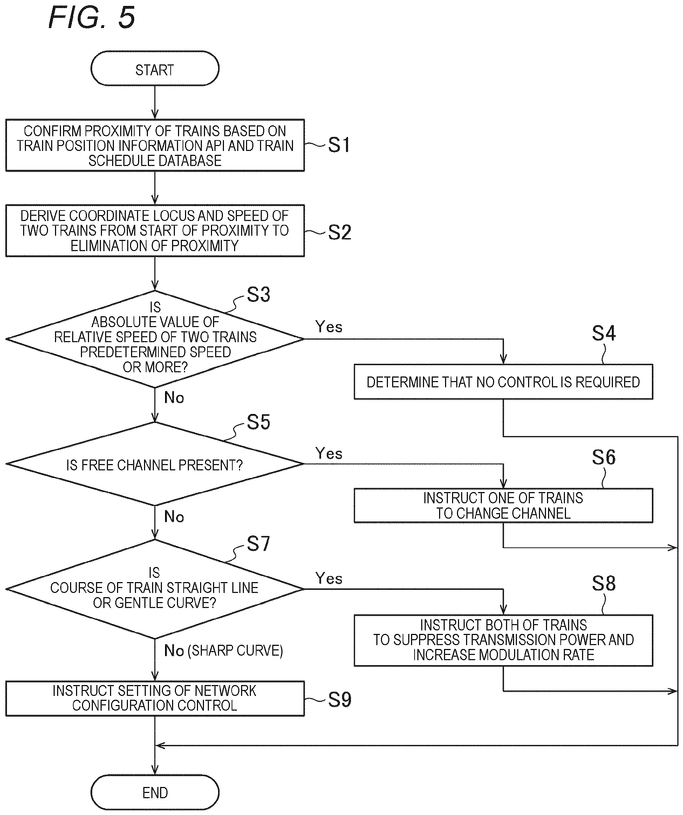

(Case of route where LTE (registered trademark) communication is possible) Fig. 5 is a flowchart for explaining the radio parameter determination processing in the LTE communication-possible route of the train position management server 1. In the drawing, the train position management server 1 confirms proximity of the trains 50, 51 based on train position information and a train schedule database (not shown) provided by the position information providing server 3 of the railroad company (step S1). Next, the train position management server 1 derives a coordinate locus and a speed of each of the trains 50, 51 from a start of the proximity to an elimination of the proximity of the trains 50, 51 (step S2). Next, the train position management server 1 determines whether an absolute value of a relative speed of the trains 50, 51 is equal to or higher than a predetermined speed based on the derived speed of each of the trains 50, 51 (step S3). When it is determined that the absolute value of the relative speed of the trains 50, 51 is equal to or higher than the predetermined speed ("Yes" in step S3), the train position management server 1 determines that no control for avoiding radio wave interference is required (step S4), and the processing ends. This is because when the absolute value of the relative speed is large, time during which the trains 50, 51 are in proximity is very short, so even if the radio wave interference is generated at that time, communication can be performed almost without delay if retransmission is performed after the trains 50, 51 are separated. In the present embodiment, evaluation is performed based on the absolute value of the relative speed, but the processing may be branched based on other criteria. For example, when the time during which the trains 50, 51 are in proximity can be predicted, the train position management server 1 may determine that no control for avoiding the radio wave interference is required if the predicted time is shorter than a predetermined time.

On the other hand, when it is determined that the absolute value of the relative speed of the trains 50, 51 is smaller than the predetermined speed ("No" in step S3), the train position management server 1 determines that control for avoiding the radio wave interference is required, and determines whether a free channel (an unused communication frequency) is present (step S5). When it is determined that the free channel is present ("Yes" in step S5), the train position management server 1 instructs one of the trains 50, 51 to change a channel (step S6). After one train is instructed to change the channel, the processing ends. On the other hand, when it is determined that no free channel is present ("No" in step S5), the train position management server 1 determines whether a course of each of the trains 50, 51 is a straight line or a gentle curve (step S7).

When it is determined that the course of each of the trains 50, 51 is the straight line or the gentle curve ("Yes" in step S7), the train position management server 1 instructs both of the trains 50, 51 to suppress transmission power and increase a modulation rate (step S8). After the train position management server 1 instructs the trains 50, 51 to suppress the transmission power and increase the modulation rate, the processing ends. On the other hand, when it is determined that the course of each of the trains 50, 51 is a sharp curve ("No" in step S7), the train position management server 1 instructs the trains 50, 51 to set network configuration control (step S9). After the train position management server 1 instructs the trains 50, 51 to set the network configuration control, the processing ends. Here, the reason why the processing is branched by the straight line or the gentle curve and the sharp curve is as follows. A magnitude of a communication-possible range is affected by a magnitude of the transmission power. Therefore, when the transmission power is suppressed by the sharp curve where a position of the millimeter-wave on-board station 23 between cars is likely to shift, possibility that communication itself fails is increased. Therefore, in the present embodiment, in the sharp curve, the transmission power is not suppressed and the network configuration control is performed. The curve can be determined based on the GPS installed on each car of the trains 50, 51, a position of a map on which the trains 50, 51 are traveling, and the like. Further, regarding an angle serving as a boundary between the "gentle curve" and the "sharp curve", for example, it is conceivable to measure in advance an angle at which communication itself becomes difficult when the transmission power is suppressed, and use that angle.

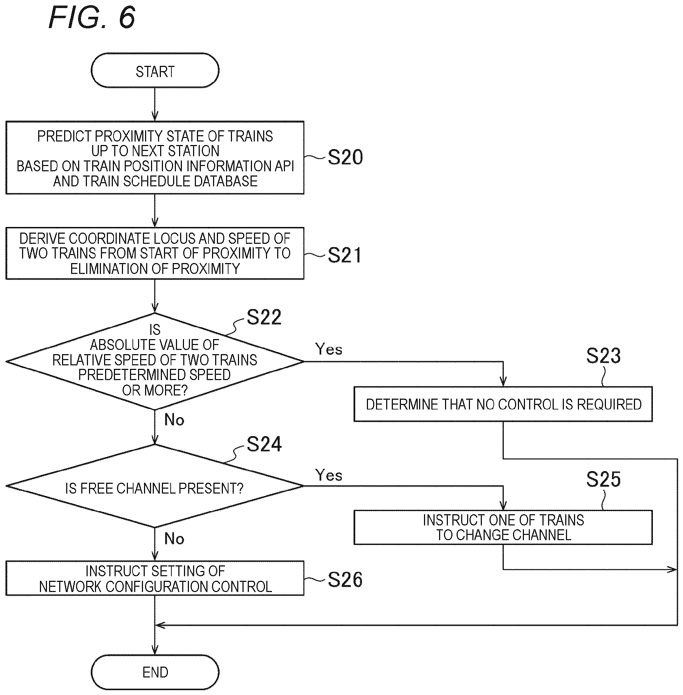

(Case of route where LTE (registered trademark) communication is impossible) Fig. 6 is a flowchart for explaining the radio parameter determination processing in the LTE communication-impossible route of the train position management server 1. In the drawing, the train position management server 1 predicts a proximity state of the trains 50, 51 until the next station based on train position information and a train schedule database (not shown) provided by the position information providing server 3 of the railroad company (step S20). Next, the train position management server 1 derives a coordinate locus and a speed of each of the trains 50, 51 from a start of the proximity to an elimination of the proximity of the trains 50, 51 (step S21). Next, the train position management server 1 determines whether an absolute value of a relative speed of the trains 50, 51 is equal to or higher than a predetermined speed based on the derived speed of each of the trains 50, 51 (step S22). When it is determined that the absolute value of the relative speed of the trains 50, 51 is equal to or higher than the predetermined speed ("Yes" in step S22), the train position management server 1 determines that no control for avoiding radio wave interference is required (step S23), and the processing ends.

On the other hand, when it is determined that the absolute value of the relative speed of the trains 50, 51 is smaller than the predetermined speed ("No" in step S22), the train position management server 1 determines that control for avoiding the radio wave interference is required, and determines whether a free channel (an unused communication frequency) is present (step S24). When it is determined that the free channel is present ("Yes" in step S24), the train position management server 1 instructs one of the trains 50, 51 to change a channel (step S25). After one train is instructed to change the channel, the processing ends. On the other hand, when it is determined that no free channel is present ("No" in step S24), the train position management server 1 instructs the trains 50, 51 to set network configuration control (step S26). After the train position management server 1 instructs the trains 50, 51 to set the network configuration control, the processing ends. Here, the reason why it is not determined whether a course is a sharp curve in the case where the LTE (registered trademark) communication is impossible is that it is difficult to predict in advance a position where the trains are in proximity.

As described above, according to the train position management server 1 according to the present embodiment, the proximity of, for example, the two trains 50, 51 performing radio communication is detected by acquiring the position information of the two trains 50, 51; when the proximity of the two trains 50, 51 is detected, as interference avoidance measures for avoiding radio wave interference generated between the two trains 50, 51, any one of (1) switching of communication frequency band (that is, channel switching), (2) suppression of transmission power and increase in modulation rate, and (3) network configuration control is determined; and since the determined interference avoidance measures are transmitted to at least one of the two trains 50, 51, the radio wave interference due to the radio communication between the two trains 50, 51 can be suppressed. Accordingly, even when the two trains 50, 51 are in proximity, stable communication can be performed in each train.

By using radio communication conforming to an LTE (registered trademark) standard for the radio communication between the train position management server 1 and the train management server 21, the interference avoidance measures can be transmitted when the train is traveling in an area where the LTE communication is possible.

By using radio communication conforming to a WiGig standard for the radio communication between the cars of the two trains 50, 51, a large amount of data can be transmitted at high speed, and an antenna can be miniaturized.

In the present embodiment, the moving object is a railroad car, but may be an automobile or a mobile terminal or the like carried by a person. However, when the present embodiment is applied to a form other than a train, it is preferable that a plurality of moving objects that perform radio communication with each other move together in each group. Further, in order to apply network configuration control, it is preferable that a group is formed in which the plurality of moving objects are connected to each other and an amount of the radio communication decreases along the connection.

In the present embodiment, the communication between the cars is performed by WiGig (registered trademark), but may be realized by other communication methods. For example, other communication methods using the millimeter wave or a different radio communication method may be used.

In the present embodiment, the train management server 21 is disposed in the leading car and the train sub-server 24 is disposed in the last car, but may be arranged in other cars. That is, the train management server 21 or the train sub-server 24 may be disposed in any car as long as a total band occupancy of the trains in proximity to each other is 1 (100%) or less. The train management server 21 and the train sub-server 24 may have the same configuration. This is because a traveling direction of the train may change at any time, so that leading and trailing ends may be frequently reversed.

Although the present invention has been described in detail with reference to a specific embodiment, it will be apparent to those skilled in the art that various changes and modifications can be made without departing from the spirit and the scope of the present invention.

This application is based on Japanese Patent Application No. 2018-148842 filed on August 7, 2018, the contents of which are incorporated herein by reference.

### Industrial Applicability

The management server and the management method according to the present invention can be applied to a group such as a train including a plurality of moving objects.

### REFERENCE SIGNS LIST

1 train position management server
2 in-train system
3 position information providing server
11 LTE transmission and reception unit
12 train position acquisition and management unit
13 train proximity detection and train relative speed calculation unit
14 interference avoidance measures determination unit
21 train management server
22 inter-car communication unit
23₁ to 23ₙ millimeter-wave on-board station
24 train sub-server
25 Ethernet (registered trademark)
26 control host
27 in-car AP
50, 51 train
211 LTE transmission and reception unit
212 GPS unit
213 train position management unit
214 interference avoidance measures holding unit
215 content management unit
216 internal storage
231 millimeter-wave RF unit
232 CPU
233 internal memory
234 I/F, power supply or the like
241 interference avoidance measures holding unit
242 content management unit
243 internal storage

## Claims

1. A management server configured to manage a group comprising a plurality of moving objects, each of the plurality of moving objects performing radio communication with other moving objects belonging to the same group and moving with other moving objects in the same group, the management server comprising:
a position acquisition unit configured to acquire position information of each of a plurality of groups;
a proximity detection unit configured to detect groups in proximity to each other based on the position information of each of the plurality of groups;
an interference avoidance measures determination unit configured to determine interference avoidance measures in response to detection of the groups in proximity to each other, the interference avoidance measures being for avoiding radio wave interference between the groups in proximity to each other, the radio wave interference being generated by the radio communication performed within each of the groups in proximity to each other; and
an interference avoidance measures transmission unit configured to transmit an instruction to implement the determined interference avoidance measures to at least one of the groups in proximity to each other.

2. The management server according to claim 1,
wherein the interference avoidance measures comprise radio parameter control on the radio communication between the plurality of moving objects performed within the group.

3. The management server according to claim 2,
wherein the interference avoidance measures determination unit further determines the radio parameter control to switch a communication frequency band if the number of the groups in proximity to each other is equal to or smaller than the number of communication frequency bands available for the radio communication performed within the group.

4. The management server according to claim 3,
wherein the interference avoidance measures determination unit determines the radio parameter control to suppress transmission power of the radio communication performed within the group if the number of the groups in proximity to each other exceeds the number of the communication frequency bands available for the radio communication performed within the group.

5. The management server according to claim 3,
wherein the interference avoidance measures determination unit determines the radio parameter control to increase a modulation rate of the radio communication performed within the group if the number of the groups in proximity to each other exceeds the number of the communication frequency bands available for the radio communication performed within the group.

6. The management server according to claim 2,
wherein the plurality of moving objects are sequenced in each of the groups and the plurality of moving objects perform the radio communication in which a communication amount decreases along the sequence, and
wherein the interference avoidance measures determination unit determines the radio parameter control to perform network configuration control that is control to make a direction in which the communication amount decreases different between the groups in proximity to each other.

7. The management server according to any one of claims 1 to 6,
wherein the interference avoidance measures determination unit determines that implementation of the interference avoidance measures is not required if a speed at which the groups in proximity to each other approach each other is equal to or higher than a predetermined speed.

8. The management server according to claim 1,
wherein the interference avoidance measures determination unit determines different interference avoidance measures depending on whether an angle between two or more moving objects included in at least one of the groups in proximity to each other exceeds a predetermined angle.

9. The management server according to claim 1,
wherein the group moves in a predetermined section,
wherein if the section where the group moves includes a section where it is difficult to establish communication between the interference avoidance measures transmission unit and at least one of the plurality of moving objects included in the group, the management server predicts whether the groups in proximity to each other is present in the section where it is difficult to establish the communication, and
wherein if it is predicted that the groups in proximity to each other are present in the section where it is difficult to establish the communication,
the interference avoidance measures determination unit determines the interference avoidance measures before the groups in proximity to each other move to the section where it is difficult to establish the communication, and
the interference avoidance measures transmission unit transmits an instruction to implement the determined interference avoidance measures to at least one of the groups in proximity to each other.

10. The management server according to any one of claims 1 to 9,
wherein the group is a train formed by connecting the plurality of moving objects, and the plurality of moving objects are a plurality of cars forming the train.

11. The management server according to any one of claims 1 to 10,
wherein the radio communication performed by the plurality of moving objects is communication using a millimeter wave.

12. A management method for managing a group comprising a plurality of moving objects, each of the plurality of moving objects performing radio communication with other moving objects belonging to the same group and moving with other moving objects in the same group, the management method comprising:
acquiring position information of each of a plurality of groups;
detecting groups in proximity to each other based on the position information of each of the plurality of groups;
determining interference avoidance measures in response to detection of the groups in proximity to each other, the interference avoidance measures being for avoiding radio wave interference between the groups in proximity to each other, the radio wave interference being generated by the radio communication performed within each of the groups in proximity to each other; and
transmitting an instruction to implement the determined interference avoidance measures to at least one of the groups in proximity to each other.
